# EUROPEAN PATENT APPLICATION

(11) **EP 3 257 817 A1**
(43) Date of publication of application: **20.12.2017**
(21) Application number: 17386021.4
(22) Date of filing: 08.06.2017
(51) Int. Cl.: C02F 1/28, C02F 1/48, C02F 1/68

(54) **A JUG INCORPORATING A WATER FILTER**

(30) Priority: 16.06.2016 GR 20160100323
(71) Applicant: Minoudis, Georgios, 14565 Agios Stefanos Attikis (GR)
(72) Inventor: Minoudis, Georgios, 14565 Agios Stefanos Attikis (GR)

(57) **Abstract**

The present invention relates to a jug incorporating a multi-step water filter. The jug consists of a vessel (1) with an openable lid and a handle. The lid has a gate for the further protection of water against pollutants. It incorporates a multi-step water filter (4), wherein water is first filtered through a plant carbon layer (8), and then passed through ceramic beads (9) of volcanic tenko-seki rock, which are activated by a layer of magnetite ore and ceramic magnet (10) and charge the water with negative ions. Layers of bakuhan rock (11) and taicho rock (12), through which the water is then passed, add the necessary metallic elements, while a layer of quartz (5) releases soluble silicon thereto.

## Description

### FIELD OF THE INVENTION

The present invention relates to the field of water management and in particular to portable devices for potable water. The invention also relates to a multi-step water treatment procedure.

### BACKGROUND OF THE INVENTION

A jug incorporating a water filter according to the present invention has not been disclosed in the state of the art.

A increasing concern nowadays is the way of life and nutrition of humans. Daily, an increasing number of people focus on a hygiene way of life, by trying either to improve their nutrition or the exercise, in order to improve their health, to control anxiety and to decrease the probabilities of developing a disease. In fact all the above activities are desirable and contribute in improving the health of the individual applying them. However, a significant disadvantage is that they ignore water, which is the main component desirable for the well-being and maintenance of the human body. Given that the human body contains water at a proportion higher than 70%, access to pure water is known to play a major role in maintaining a healthy organism. Apart of the ensuring potable water, which is the main goal, at a subsequent stage water quality must also be checked.

One of the most significant problems lies in quality of the water consumed. Water is the main hydrating and detoxicating agent for the organism, since it constitutes the main component of the cells in live organisms. The consumption of water is the recommended way for rejuvenation, hydration and oxygenation of our organism. Additionally, considering that blood consists of 83% water, its significance in the transport of nutrients and the development of antibodies in a human's organism is apparent. The above-mentioned advantageous properties may be obtained only if the water consumed is pure and of increased quality. This may be achieved by the consumption of bottled water, which is derived from pure sources and is bottled directly at plants nearby. In fact, water may be considered as of high quality if it is consumed directly. However, from the bottling until consumption, multiple steps and considerable time periods are interposed. As a result, water being packaged in plastic bottles is exposed in weather conditions and burdened. A result of this is the leakage of toxins and microorganisms are also grown in water, which are derived from the individual plastic material. Furthermore, the package material itself is a burden and pollutes the environment, since it is known that the decomposition of a plastic bottle not recycled in the proper manner potentially requires more the 500 years.

A further significant disadvantage which is currently taken into account is the cost. A bottle of water has a significantly larger cost than tap water. Due to the long time period required for possible impacts on body, most people select the most cost-effective choice, even if they know that the quality of tap water is usually poor.

Other possible solutions that have been proposed in the art include the use of filters on the water supply, the filters being either of the active carbon, reverse osmosis or distillation type. The most significant problem of the said filters is that they retain metals and trace elements from water, irrespective of whether these are beneficial to the organism. Essentially, the specific filters provide water that can simply relieve the consumer for thirst, without providing all those nutrient ingredients required for the organism from water, resulting to an insufficient hydration.

It is an object of the present invention to address advantageously the said disadvantages and defects of the prior art, by proposing a jug incorporating a water filter.

A further object of the present invention is to provide a jug with a multi-step filter, which reduces or even eliminates chlorine, lead and other harmful agents from potable water by gravity filtration.

A further object of the present invention is to provide a jug with a multi-step filter, which adds alkaline elements in water, increasing its organoleptic elements, providing a potentiating system.

A further object of the invention, in order to make the above invention useful, is to offer a jug with a multi-step filter, which improves the taste and quality of water.

A further object of the invention is to offer a jug with a multi-step filter, which reduces trihalomethanes, including chloroform and bromoform, which are by-products of water chlorination reaching the consumers.

Another object of the invention is to offer a jug incorporating a multi-step filter, which has a high capacity, serving the needs of consumers for directly accessible, potable water.

Another object of the present invention is to offer a jug incorporating a multi-step filter, which potentiates water in three, discrete steps. The first step combines ceramic rocks with magnetite and a ceramic magnetite, applying magnetic fields to water, while the second step includes rocks, which add low levels of calcium, potassium, yttrium, vanadium and other metals in water, imparting a unique taste to it. Finally, in the third step, water is passed through quartz (silicon dioxide), which releases soluble silicon in water.

An object of the present invention is also to offer a jug incorporating a multi-step filter, which has a filter system with a mixture of plant carbon from biological coconut and an ion-exchange resin.

A further advantage of the invention is that the jug can operate at temperatures 4.5 °C-29.4 °C.

These and other objects, features and advantages of the invention will be apparent from the following detailed description.

### BRIEF DESCRIPTION OF THE FIGURES

The invention will be understood to those skilled in the art with reference to the accompanying figures, in which the invention is depicted in an exemplary, non-limiting way:
Figure 1 shows in perspective the jug incorporating a multi-step filter.
Figure 2 shows in side view the jug incorporating a multi-step filter.
Figure 3 shows in side cross-section the jug, at the upper portion of which the incorporated multi-step filter is shown.

### DETAILED DESCRIPTION OF A PREFERRED EMBODIMENT

Referring now to the accompanying figures, we will describe exemplary embodiments of the hug incorporating a multi-step filter.

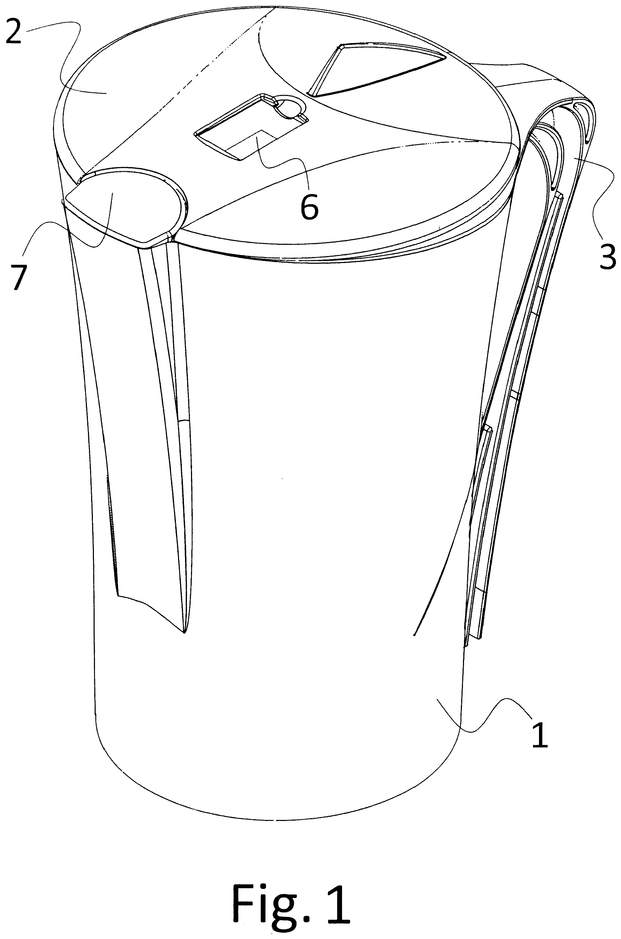

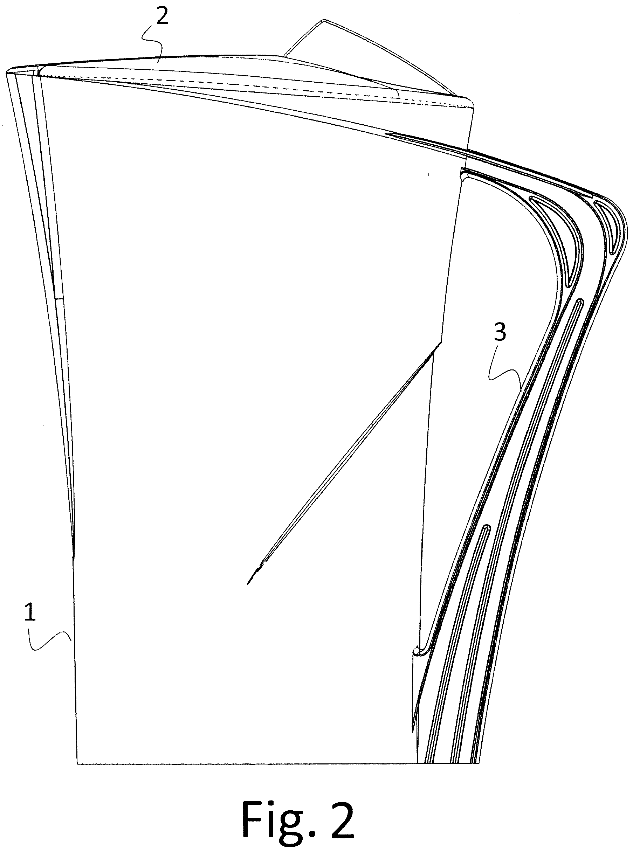

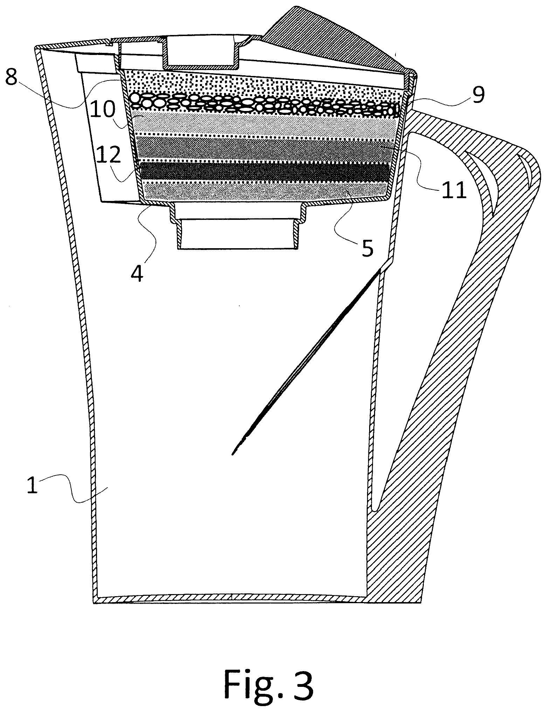

The invention relates to a jug consisting of a vessel (1), Fig. 1, with an openable lid (2) and a handle (3). The jug is made of a high-quality plastic, which is exceptionally rigid, with an excellent chemical resistance, while it exhibits hydrolytic stability and resistance to heat. Additionally, it has been configured for medical uses, while during drying a coating of natural fibers is formed, so that traces of plastic may not migrate in water. The jug also includes a multi-step filter (4), fig. 3, through which water is passed, filtered and potentiated by the addition of metallic trace elements. Figure (1), fig. 2, has a capacity for example 2.2 liters, without excluding the use of vessels of a higher or smaller capacity, depending on the individual needs.

The openable lid (2) in an exemplary embodiment of the invention comprises an incision (6), in which a time switch is mount and which can measure the required time period until the recommended replacement of the filter (4). In this way, it is ensured that the consumer will always have a device that satisfies the manufacture specifications and will obtain properly filtered and potentiated water. Furthermore, the lid (2) has a gate (7) at its lip, which opens upwards, due to gravity when the jug is filled with water whereas it closes when the jug is not used, ensuring the protection of the water contained in the vessel (1) against microorganisms, insects or other dirty materials that may enter therein and pollute it.

During filling of the vessel (1) of the jug with water, this is initially passed through the first layer in the filter (4), the first layer consisting of a plant carbon layer (8), in particle form. Carbon is an excellent material for water filtration since it can retain substances in a solid, liquid or even gaseous form which come in contact with the filter and at multiple quantities compared to its weight. This property is employed by the filter (4), so that tap water during its filtration is purified and freed from pathogens and microorganisms. At the same time it frees water from the ugly taste and possible odors. Furthermore, it is noted that the water obtained keeps the beneficial trace elements and metals which make it necessary for the organism.

Thereafter, the filtered water is passed through rocks with magnetic properties. These are separated at two levels. In the first level, volcanic tenko-seki rock in the form of ceramic beads (9) is arranged, while in the other level, a magnetite ore and a ceramic magnet (10) are arranged with activate the rock. The volcanic rock emits high-frequency waves of the far infrared spectrum, which aid in the discharge of toxic metals from the organism, prevent spreading of microbes and fungi and have a regenerating and cleaning action. As water passes through the said levels, it is charged with negative ions which further aid in the control of free radicals, the decrease of oxidative stress, the discharge of toxins and the better hydration of the cells. After the water has passed through the second filtration and potentiation step, it is carried through the next step, where it is passed through other two rocks, which are arranged one on top of the other. The first layer (11) comprises bakuhan rocks and the second layer (12) consists of taicho rocks. In this step and during passing through the two said layers, metallic elements such as calcium, potassium, silicon, vanadium and yttrium is added at low concentrations, enhancing the organoleptic properties of the filtered water. The taicho rock emits medium-frequency rays of the far infrared spectrum which have a therapeutic and detoxicating action. Also they impart antifungal properties to water. Additionally, electrolytes are added in the water, while pesticide residues and remaining chloro-organelles are deactivated. Finally, they improve water taste, offering a unique after-taste. In the last step, the water is passed through a quartz layer (5) (made of silicon dioxide), releasing soluble silicon in the water. As it has been scientifically demonstrated, soluble water binds toxic aluminum in water.

It should be noted that the description of the invention was made with reference to exemplary, non-limiting embodiments. Thus any variation or modification as regards shape, dimensions, morphology, construction/assemblage materials and components used, as long as not constituting a new and inventive step and not contributing to the technical advance of the already known, are considered as encompassed in the scope of the present invention.

## Claims

1. A jug incorporating a water filter, consisting of a vessel (1), an openable lid (2), with a gate (7) for the protection of the water in the vessel, a handle (3) and an incorporated multi-step filter (4), with a plant carbon layer (8), ceramic beads (9) of volcanic tenko-seki rock, a layer of a magnetite ore and a ceramic magnet (10) and layers of bakuhan rock (11), taicho rock (12) and quartz (5), **characterized in that** water is passed through the plant carbon layer (8) and filtered, through the layer of a magnetite ore and a ceramic magnet (10) which,activate the ceramic beads of the volcanic tenko-seki rock (9), which emits high-frequency waves of the far infrared spectrum, charging the water with negative ions, before it passes through the bakuhan (11) and taicho (12) rocks which add metallic elements to it and through a layer of quartz (5), which releases soluble silicon thereto.
